# EUROPEAN PATENT APPLICATION

(11) **EP 4 598 105 A1**
(43) Date of publication of application: **06.08.2025**
(21) Application number: 23887831.8
(22) Date of filing: 30.10.2023
(51) Int. Cl.: H04W 24/08

(54) **GAP INFORMATION REPORTING METHOD AND APPARATUS, AND COMMUNICATION DEVICE, SYSTEM AND STORAGE MEDIUM**

(30) Priority: 07.11.2022 CN 202211387419
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Murgitroyd & Company
(86) International application number: PCT/CN2023/127761
(87) International publication number: WO 2024/099141

(57) **Abstract**

This application discloses a gap information reporting method and apparatus, a communication device, a system, and a storage medium, pertaining to the field of communication technologies. The gap information reporting method of embodiments of this application includes: reporting, by a UE, gap priority preference information (301) to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

## Description

### CROSS-REFERENCE TO RELATED APPLICATION

This application claims priority to Chinese Patent Application No. 202211387419.8, filed in China on November 7, 2022, which is incorporated herein by reference in its entirety.

### TECHNICAL FIELD

This application pertains to the field of communications technologies, and specifically, relates to a gap information reporting method and apparatus, a communication device, a system, and a storage medium.

### BACKGROUND

Currently, when a network-side device configures multiple measurement gap patterns (that is, Gap pattern), conflicts may occur between multiple gaps at a specific time point. To address this issue, the network-side device may configure respective priorities for different measurement gap patterns. When gaps of different gap patterns conflict, a to-be-retained gap and a to-be-discarded gap can be determined based on the priority of each measurement gap pattern.

For a multi-universal subscriber identity module gap (Multi-Universal Subscriber Identity Module gap, MUSIM Gap), the network-side device may configure priorities for different gap patterns based on a MUSIM gap priority preference reported by a UE. However, there is currently no solution for what specific gap priority preference information the UE should report to enable the network-side device to learn a corresponding gap priority preference for configuring gap priorities and to avoid or reduce reconfiguration of other measurement gaps by the network-side device.

### SUMMARY

Embodiments of this application provide a gap information reporting method and apparatus, a communication device, a system, and a storage medium, which can resolve the problem of what specific gap priority preference information UE should report to enable a network-side device to learn a corresponding gap priority preference for configuring gap priorities and to avoid or reduce reconfiguration of other measurement gaps by the network-side device.

According to a first aspect, a gap information reporting method is provided, where the method includes: reporting, by a UE, gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

According to a second aspect, a gap information reporting apparatus is provided, where the apparatus includes a reporting module. The reporting module is configured to report gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

According to a third aspect, a gap information reporting method is provided, where the method includes: receiving, by a network-side device, gap priority preference information reported by a UE, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

According to a fourth aspect, a gap information reporting apparatus is provided, where the apparatus includes a receiving module. The receiving module is configured to receive gap priority preference information reported by a UE, where the gap priority preference information includes a priority value of at least one first gap; where the priority value of the at least one first gap meets at least one of the following: being used for comparison with priority values of N measurement gaps configured by the gap information reporting apparatus, where N is a positive integer; a priority value of each first gap in the at least one first gap falling within a gap priority range; and being used to indicate a priority relationship between the at least one first gap.

According to a fifth aspect, a UE is provided, where the UE includes a processor and a memory, where a program or instructions executable on the processor are stored in the memory. When the program or the instructions are executed by the processor, the steps of the method according to the first aspect are implemented.

According to a sixth aspect, a UE is provided, including a processor and a communication interface, where the communication interface is configured to report gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

According to a seventh aspect, a network-side device is provided, where the network-side device includes a processor and a memory, where a program or instructions executable on the processor are stored in the memory. When the program or the instructions are executed by the processor, the steps of the method according to the third aspect are implemented.

According to an eighth aspect, a network-side device is provided, where the network-side device includes a processor and a communication interface, where the communication interface is configured to receive gap priority preference information reported by a UE, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

According to a ninth aspect, a communication system is provided, including a UE and a network-side device, where the UE can be configured to execute the steps of the gap information reporting method according to the first aspect, and the network-side device can be configured to execute the steps of the gap information reporting method according to the third aspect.

According to a tenth aspect, a readable storage medium is provided, where a program or instructions are stored in the readable storage medium, and in a case that the program or the instructions are executed by a processor, the steps of the method according to the first aspect are implemented, or the steps of the method according to the third aspect are implemented.

According to an eleventh aspect, a chip is provided, where the chip includes a processor and a communication interface, the communication interface is coupled to the processor, and the processor is configured to run a program or instructions to implement the method according to the first aspect or the method according to the third aspect.

According to a twelfth aspect, a computer program/program product is provided, where the computer program/program product is stored in a storage medium, and the computer program/program product is executed by at least one processor to implement the steps of the gap information reporting method according to the first aspect are implemented, or the steps of the gap information reporting method according to the third aspect.

In the embodiments of this application, the UE can send gap priority preference information to the network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap. According to this solution, the UE can report the gap priority preference information including the priority value of at least one first gap to the network-side device, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the UE can report the gap priority preference information that meets a specific condition, so that the network-side device can learn about the corresponding gap priority preference to configure the priority of the gap, thereby avoiding or reducing reconfiguration of other measurement gaps by the network-side device.

### BRIEF DESCRIPTION OF DRAWINGS

FIG. 1 is a schematic architectural diagram of a wireless communication system according to an embodiment of this application;
FIG. 2 is a schematic diagram of conflicts between multiple measurement gap patterns;
FIG. 3 is a first flowchart of a gap information reporting method according to an embodiment of this application;
FIG. 4 is a second flowchart of a gap information reporting method according to an embodiment of this application;
FIG. 5 is a first structural schematic diagram of a gap information reporting apparatus according to an embodiment of this application;
FIG. 6 is a second structural schematic diagram of a gap information reporting apparatus according to an embodiment of this application;
FIG. 7 is a schematic structural diagram of hardware of a communication device according to an embodiment of this application;
FIG. 8 is a schematic structural diagram of hardware of a UE according to an embodiment of this application; and
FIG. 9 is a schematic structural diagram of hardware of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

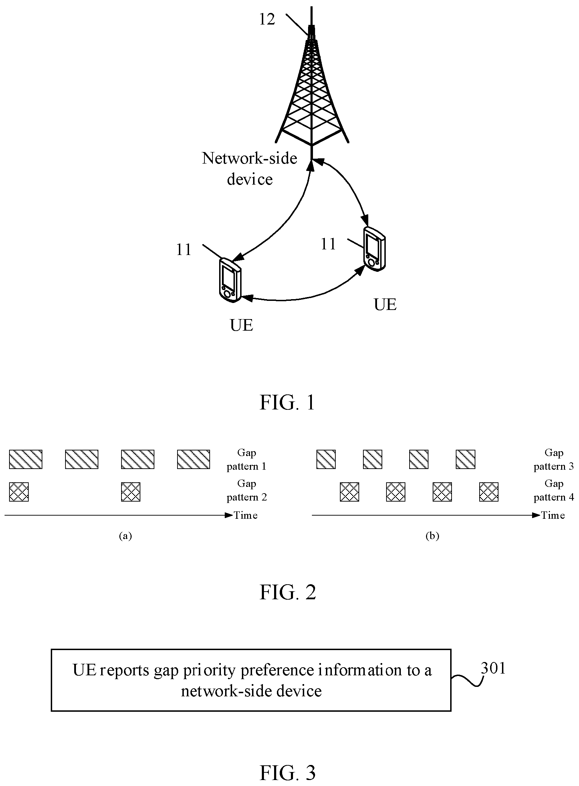

FIG. 1 is a block diagram of a wireless communication system applicable to an embodiment of this application. The wireless communication system includes a terminal 11 and a network-side device 12. The terminal 11 may be a mobile phone, a tablet computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following specifically describes a gap information reporting method and apparatus, a communication device, a system, and a storage medium provided in the embodiments of this application through specific embodiments and application scenarios thereof with reference to the accompanying drawings.

Current terminals include not only single-card terminals but also multi-card terminals. The capabilities of the multi-card terminals may include single-transmit single-receive, single-transmit dual-receive, and dual-transmit dual-receive. One feature of the multi-card terminals is that they can simultaneously camp on multiple networks. For example, a multi-card terminal can simultaneously transmit and receive on multiple networks without mutual interference, or a dual-transmit dual-receive multi-card terminal can simultaneously transmit and receive on specific frequency bands on multiple networks without interference, but on other frequency bands, it may transmit and receive data on two networks in a time-division manner.

Generally, one UE may be considered as one subscription entity, where the subscription entity can be embodied by a universal subscriber identity module (Universal Subscriber Identity Module, SIM) card. One SIM card corresponds to a subscription entity of one network. The SIM card may store an identifier of the subscription entity (that is, an identifier of the UE), where the identifier may be a subscription permanent identifier (Subscription Permanent Identifier, SUPI) or an international mobile subscriber identity (International Mobile Subscriber Identity, IMSI). Therefore, when one terminal includes multiple SIM cards or is configured with information about multiple electronic SIM cards, the terminal and different subscription entities may constitute different UEs. That is, a multi-card terminal may include multiple UEs, and the multiple UEs are referred to as MUSIM UEs.

A MUSIM purpose (MUSIM purpose) may include at least one of the following: cell identification and measurement, paging monitoring, system information bock (System Information Block, SIB) reception, and on-demand system information request. When the UE is in a connected state on a network A and requires a gap to perform a MUSIM task on a network B, the network-side device may provide the UE with up to three periodic gaps and/or one aperiodic gap. For example, the network-side device is configured with three periodic gaps, namely Gap1, Gap2, and Gap3. Gap1 is used to receive a synchronization signal block (Synchronization Signal Block, SSB) and/or a paging early indication (Paging Early indication, PEI), and perform serving cell measurement based on SSB. Gap2 is used for paging monitoring. Gap3 is used for neighboring cell measurement. The PEI is used to indicate whether there is a paging for the UE associated with a paging occasion (Paging Occasion, PO) on its associated PO. When the PEI is configured, the UE first monitors the PEI and then determines whether to monitor the PO. For example, if the UE detects the PEI and a PEI bit value of a packet corresponding to the UE is "1", the UE monitors its corresponding PO; otherwise, the UE does not monitor the PO.

However, in multiple gap patterns configured by the network-side device, multiple gaps may conflict at a specific time point.

For example, as shown in FIG. 2 (a), there is an obvious conflict in time between gaps in gap pattern 1 and between gaps in gap pattern 2. As shown in FIG. 2 (b), although gaps in gap pattern 3 configured by the network-side device does not overlap with gaps in gap pattern 4, a time interval between two gaps corresponding to the two gap patterns is less than x (where x is 4ms in R17), it is also considered that two gaps conflict.

To resolve the gap conflict problem, for a concurrent gap (that is, concurrent gap) in R17, a gap conflict solution based on priorities is introduced, where a related priority is configured for each gap pattern; and when gaps of different gap patterns conflict, a to-be-retained gap and a to-be-discarded gap can be determined based on the priority of each gap pattern. For a MUSIM gap, the network-side device may configure priorities for different gap patterns based on a MUSIM gap priority preference reported by a UE, so as to avoid or reduce reconfiguration of other measurement gaps by the network-side device. However, there is currently no solution for what specific gap priority preference information the UE should report to enable the network-side device to learn a corresponding gap priority preference for configuring gap priorities and to avoid or reduce reconfiguration of other measurement gaps by the network-side device.

To resolve the foregoing problem, in the gap information reporting method provided in the embodiments of the application, the UE can send gap priority preference information to the network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap. According to this solution, the UE can report the gap priority preference information including the priority value of at least one first gap to the network-side device, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the UE can report the gap priority preference information that meets a specific condition, so that the network-side device can learn about the corresponding gap priority preference to configure the priority of the gap, thereby avoiding or reducing reconfiguration of other measurement gaps by the network-side device.

An embodiment of the application provides a gap information reporting method, and FIG. 3 is a flowchart of a gap information reporting method according to an embodiment of this application. As shown in FIG. 3, the gap information reporting method provided in this embodiment of this application may include the following step 301.

Step 301: A UE reports gap priority preference information to a network-side device.

In this embodiment of this application, the gap priority preference information includes a priority value of at least one first gap.

Optionally, in this embodiment of this application, the at least one first gap is a MUSIM gap.

For specific description of the MUSIM gap, refer to the related descriptions in related technologies. To avoid repetition, details are not described herein again.

In this embodiment of this application, the at least one first gap may be a MUSIM gap, and therefore reporting priority preference information of the MUSIM gap can be implemented.

In this embodiment of this application, the priority value of the at least one first gap meets at least one of the following (1.1) to (1.3):
(1.1) Being used for comparison with priority values of N measurement gaps configured by the network-side device, where N is a positive integer.
   Optionally, in this embodiment of this application, during determining of the priority value of the at least one first gap, the UE needs to refer to the priority values of the N measurement gaps, comparing the determined priority value of the at least one first gap against the priority values of the N measurement gaps.
(1.2) A priority value of each first gap in the at least one first gap falls within a gap priority range.

Optionally, in this embodiment of this application, the gap priority range may be configured by the network-side device or specified by a protocol.

In this embodiment of this application, because the gap priority range can be configured by the network-side device or specified by the protocol, flexibility of determining the gap priority range can be improved.

(1.3) Being used to indicate a priority relationship between the at least one first gap.

Optionally, in this embodiment of this application, during determining of the priority value of the at least one first gap, the UE does not need to refer to the priority values of the N measurement gaps (that is, not need to perform comparison against the priority values of the N measurement gaps), and only a determined priority value is required to indicate a relative priority relationship between the at least one first gap.

Optionally, in this embodiment of this application, if the priority value of the at least one first gap is used to indicate the priority relationship between the at least one first gap, the priority value of the at least one first gap may be: a priority value within a high/low priority range indicated by the network-side device, a priority value indicated by the network-side device, or a priority value outside the priority range of the measurement gap.

For example, using the priority value of the at least one first gap being a priority value outside the priority range of the measurement gap as an example, if the priority value of the at least one first gap is priority values of three first gaps and the priority range of the measurement gap is [1,16], the priority values of the three first gaps can be 17, 19, and 20. It can be seen that the priority values of the three first gaps can indicate a relative priority relationship between the three first gaps, and do not need to compare with the priority values of the N measurement gaps.

Optionally, in this embodiment of this application, the gap priority preference information may further include gap purpose information, and the gap purpose information is used for indicating a purpose of each first gap in the at least one first gap.

The purpose includes at least one of the following (2.1) to (2.9):
(2.1) Paging monitoring.
(2.2) PO monitoring.
(2.3) PEI monitoring.
(2.4) Serving cell measurement.
(2.5) Neighboring cell measurement.
(2.6) Intra-frequency measurement.
(2.7) Inter-frequency measurement.
(2.8) A first purpose with a purpose priority greater than or equal to a first purpose priority threshold.

It can be understood that the first purpose is a high-priority purpose.

Optionally, in this embodiment of the application, the first purpose may include at least one of the following: PO monitoring, PEI monitoring, and serving cell measurement.

(2.9) A second purpose with a purpose priority less than or equal to a second purpose priority threshold.

It can be understood that the second purpose is a low-priority purpose.

Optionally, in this embodiment of the application, the second purpose may include at least one of the following: neighboring cell measurement, intra-frequency measurement, and inter-frequency measurement.

It should be noted that in actual implementation, the first purpose and second purpose may be any purpose determined by the UE according to a use requirement, which is not limited in this embodiment of this application.

Optionally, in this embodiment of this application, the gap purpose information may be any information that can indicate the purpose.

Optionally, in this embodiment of this application, the gap purpose information may be bit indication information.

In this embodiment of this application, the gap priority preference information may include gap purpose information for indicating a purpose of each first gap, complexity of reporting the gap priority preference information by the UE can be reduced by reporting the gap purpose information.

Optionally, in this embodiment of this application, the priority value of the at least one first gap may further meet at least one of the following (3.1) and (3.2).

(3.1) Not being used for comparison with the priority values of the N measurement gaps.

Optionally, in this embodiment of this application, the priority value of the at least one first gap may be any value determined by the UE, and the UE does not need to refer to the priority values of the N measurement gaps during determining of the priority value of the at least one first gap.

Optionally, in this embodiment of this application, M (M is a positive integer) highest priorities indicated in the priority value of the at least one first gap may be used for paging monitoring. After receiving the gap priority preference information, the network-side device may identify, based on the M highest priorities, a gap used for paging monitoring.

(3.2) Being configured as a target priority value.

In this embodiment of this application, the target priority value is configured by the network-side device or specified by the protocol.

In this embodiment of this application, the priority value of the at least one first gap may further meet at least one of the foregoing (3.1) and (3.2), thereby further reducing complexity of reporting the gap priority preference information by the UE.

Optionally, in this embodiment of this application, the foregoing step 301 can be specifically implemented by the following step 301a.

Step 301a: The UE reports the gap priority preference information to the network-side device using a target parameter field.

The target parameter field may include at least one of the following:

(4.1) A first parameter field, where the first parameter field is a parameter field for configuring gap priorities by the network-side device.

Optionally, in this embodiment of this application, the first parameter field may be a parameter field indicated by a gapPriority (namely, gap priority) parameter.

(4.2) A second parameter field, where the second parameter field is a parameter field different from the parameter field for configuring gap priorities by the network-side device.

Optionally, in this embodiment of this application, the second parameter field may be a parameter field indicated by a newly added parameter different from the gapPriority. For example, the newly added parameter may be a gapPriorityPreference (namely, gap priority preference) parameter.

Optionally, in this embodiment of this application, after the UE reports the gap priority preference information to the network-side device based on the target parameter field, the network-side device may configure the priority value of the at least one first gap as a priority value different from the priority value of the at least one first gap in the gap priority preference information.

In this embodiment of this application, the UE can report the gap priority preference information to the network-side device based on at least one of the foregoing (4.1) and (4.2), thereby further improving flexibility of reporting the gap priority preference information by the UE.

Optionally, in this embodiment of this application, the UE may report the gap priority preference information by reporting UE assistance information (that is, UE assistance information). The UE assistance information may also include configuration information of the at least one first gap, where the configuration information may include a length, a start time, and the like of each first gap.

In the gap information reporting method provided in this embodiment of this application, the UE can report the gap priority preference information including the priority value of at least one first gap to the network-side device, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the UE can report the gap priority preference information that meets a specific condition, so that the network-side device can learn about the corresponding gap priority preference to configure the priority of the gap, thereby avoiding or reducing reconfiguration of other measurement gaps by the network-side device.

Optionally, in this embodiment of this application, the priority value of the at least one first gap meets that the priority value of each first gap falls within the gap priority range configured by the network-side device. Then, before the step 301, the gap information reporting method provided in this embodiment of this application may further include the following steps 302 and 303.

Step 302: The UE receives a gap configuration message sent by the network-side device.

**In** this embodiment of this application, the gap configuration message includes gap priority preference range information, where the gap priority preference range information is used to indicate the gap priority range.

For example, the gap priority range indicated by the gap priority preference range information may be [1,4], or the indicated gap priority range may include a reserved high priority range [1,4], a reserved low priority range [11,16], and the like.

Further, if the priority range of the measurement gap configured by the network-side device is [5,10], the priority value of the MUSIM gap configured by the network-side device may be the same as the priority value included in the gap priority preference reported by the UE, thus avoiding or reducing reconfiguration of other measurement gaps by the network-side device.

Optionally, in this embodiment of this application, the gap configuration message may be a radio resource control (Radio Resource Control, RRC) reconfiguration message.

Optionally, in this embodiment of this application, the gap configuration message may further include configuration information of N measurement gaps, and configuration information of each measurement gap includes a priority value of the configured measurement gap.

Step 303: The UE determines, based on the gap configuration message, the gap priority preference information corresponding to the at least one first gap.

In this embodiment of this application, the priority value of the at least one first gap in the gap priority preference information determined by the UE each falls within the gap priority preference range.

Optionally, in this embodiment of this application, after receiving the gap priority preference information, the network-side device may configure the priority value of the at least one first gap as a priority value the same as the priority value of the at least one first gap in the gap priority preference information.

In this embodiment of this application, before the UE reports the gap priority preference information, the priority value of each first gap can be configured to be within the gap priority range according to the gap configuration message that includes the gap priority preference range information and is sent by the network-side device, so as to determine the gap priority preference information, thereby reducing complexity of determining the gap priority preference information by the UE, and also avoiding a conflict between the priority value of the at least one first gap and the priority value of the measurement gap configured by the network-side device.

Optionally, in this embodiment of this application, the priority value of the at least one first gap meets being used for comparison with the priority values of the N measurement gaps. In this case, before the foregoing step 301, the gap information reporting method provided in this embodiment of this application may further include the following steps 304 and 305.

Step 304: The UE receives a gap configuration message sent by the network-side device.

In this embodiment of this application, the gap configuration message includes the priority values of the N measurement gaps.

Step 305: The UE determines, based on the gap configuration message, the gap priority preference information corresponding to the at least one first gap.

The priority value of the at least one first gap is at least partially different from the priority values of the N measurement gaps.

For example, assuming that the priority values of the N measurement gaps are 4, 7, and 10, the priority value of the at least one first gap may be a value other than 4, 7, and 10 in [1,16]. That is, the priority value of the at least one first gap is different from the priority values of the N measurement gaps. This avoids or reduces reconfiguration of other measurement gaps by the network-side device.

In this embodiment of this application, before reporting the gap priority preference information, the UE can first configure, according to the gap configuration message that includes the priority values of the N measurement gaps and sent by the network-side device, the priority value of the at least one first gap, which is at least partially different from the priority values of the N measurement gaps, so as to determine the gap priority preference information. Therefore, a conflict between the priority value of the at least one first gap and the priority value of the measurement gap configured by the network-side device can be avoided to reduce a probability that the network-side device reconfigures the existing measurement gap, thus reducing signaling load and reducing impact on UE measurement and scheduling.

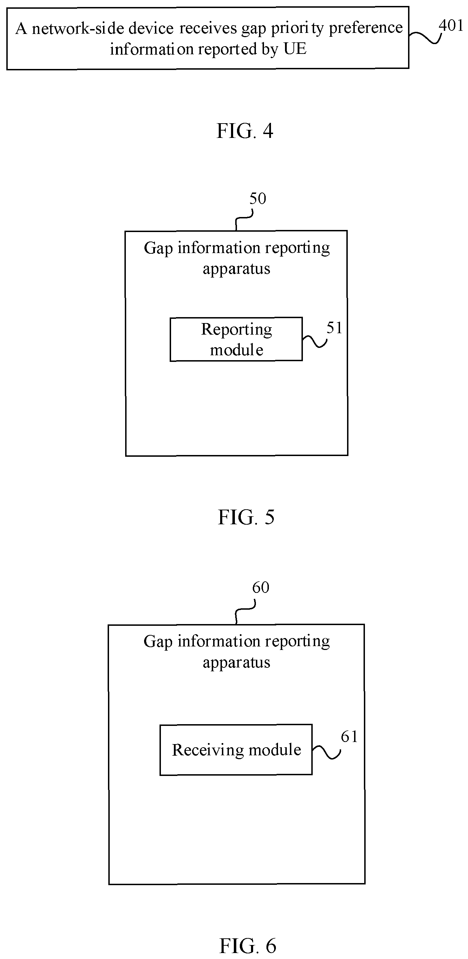

An embodiment of the application provides a gap information reporting method, and FIG. 4 is a flowchart of a gap information reporting method according to an embodiment of this application. As shown in FIG. 4, the gap information reporting method provided in this embodiment of this application may include the following step 401.

Step 401: A network-side device receives gap priority preference information reported by a UE.

In this embodiment of this application, the gap priority preference information includes a priority value of at least one first gap.

Optionally, in this embodiment of this application, the at least one first gap is a MUSIM gap.

In this embodiment of this application, the priority value of the at least one first gap meets at least one of the following:
(5.1) being used for comparison with priority values of N measurement gaps configured by the network-side device, where N is a positive integer;
(5.2) a priority value of each first gap in the at least one first gap falls within a gap priority range; and
(5.3) being used to indicate a priority relationship between the at least one first gap.

Optionally, in this embodiment of this application, the gap priority range may be configured by the network-side device or specified by a protocol.

Optionally, in this embodiment of this application, the gap priority preference information may further include gap purpose information, and the gap purpose information is used for indicating a purpose of each first gap in the at least one first gap.

The purpose may include at least one of the following:
(6.1) paging monitoring.
(6.2) PO monitoring;
(6.3) PEI monitoring;
(6.4) serving cell measurement;
(6.5) neighboring cell measurement;
(6.6) intra-frequency measurement;
(6.7) inter-frequency measurement;
(6.8) a first purpose with a purpose priority greater than or equal to a first purpose priority threshold; and
(6.9) a second purpose with a purpose priority less than or equal to a second purpose priority threshold.

According to the gap information reporting method provided in this embodiment of this application, the network-side device can receive the gap priority preference information including the priority value of at least one first gap and reported by the UE, where the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the network-side device can learn about the corresponding gap priority preference based on the gap priority preference information meeting specific conditions and reported by the UE, so as to configure the priority of the configured gap, thus avoiding or reducing reconfiguration of other measurement gaps by the network-side device.

Optionally, in this embodiment of this application, after the foregoing step 401, the gap information reporting method provided in this embodiment of this application may further include the following step 402.

Step 402: The network-side device configures a priority value for the at least one first gap based on the gap priority preference information.

In this embodiment of this application, the network-side device can configure the priority value for the at least one first gap based on the gap priority preference information; therefore, the configured priority value may be a priority value expected by the UE, thereby reducing the reconfiguration process of other measurement gaps by the network-side device.

Optionally, in this embodiment of this application, in a case that a first condition is met, the priority value configured by the network-side device for the at least one first gap is the same as the priority value of the at least one first gap included in the gap priority preference information.

The first condition may include at least one of the following that:
(7.1) the priority value of the at least one first gap is used for comparison with the priority values of N measurement gaps configured by the network-side device;
(7.2) the priority value of each first gap falls within the gap priority range; and
(7.3) the priority value of the at least one first gap is configured as a target priority value, where the target priority value is configured by the network-side device or specified in a protocol.

Optionally, in this embodiment of this application, in a case that a second condition is met, the priority value configured by the network-side device for the at least one first gap is at least partially different from the priority value of the at least one first gap included in the gap priority preference information.

The second condition may include at least one of the following that:
(8.1) the priority value of the at least one first gap is used to indicate a priority relationship between the at least one first gap; and
(8.2) the priority value of the at least one first gap is not used for comparison with the priority values of N measurement gaps configured by the network-side device.

Optionally, in this embodiment of this application, the gap priority preference information is reported by the UE using a target parameter field.

The target parameter field includes at least one of the following:
(A) a first parameter field, where the first parameter field is a parameter field for configuring gap priorities by the network-side device; and
(B) a second parameter field, where the second parameter field is a parameter field different from the parameter field for configuring gap priorities by the network-side device.

Optionally, in this embodiment of this application, before the foregoing step 401, the gap information reporting method provided in this embodiment of this application may further include the following step 403.

Step 403: The network-side device sends a gap configuration message to the UE.

The gap configuration message may include gap priority preference range information, where the gap priority preference range information is used to indicate the gap priority range.

For specific description in the embodiments of this application and the technical effects that can be achieved by the technical features, refer to related descriptions in the foregoing UE-side method embodiments. To avoid repetition, details are not described herein again.

For the gap information reporting method provided in the embodiments of this application, the execution subject can be a gap information reporting apparatus. In the embodiments of this application, the gap information reporting apparatus provided in the embodiments of this application is described by using the gap information reporting method being executed by the gap information reporting apparatus as an example.

With reference to FIG. 5, an embodiment of this application provides a gap information reporting apparatus 50, where the gap information reporting apparatus 50 may include a reporting module 51. The reporting module 51 is configured to report gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

In a possible implementation, the gap priority range may be configured by the network-side device or specified by a protocol.

In a possible implementation, the priority value of the at least one first gap meets that the priority value of each first gap falls within the gap priority range configured by the network-side device; and the gap information reporting apparatus 50 further includes a receiving module and a determining module. The receiving module is configured to: before the reporting module 51 reports the gap priority preference information to the network-side device, receive a gap configuration message sent by the network-side device, where the gap configuration message includes gap priority preference range information, and the gap priority preference range information is used for indicating the gap priority range; and the determining module is configured to determine the gap priority preference information corresponding to the at least one first gap based on the gap configuration message received by the receiving module.

In a possible implementation, the priority value of the at least one first gap meets: being used for comparison with the priority values of the N measurement gaps; and the gap information reporting apparatus 50 may further include a receiving module and a determining module. The receiving module is configured to: before the reporting module 51 reports the gap priority preference information to the network-side device, receive a gap configuration message sent by the network-side device, where the gap configuration message includes the priority values of the N measurement gaps; and the determining module is configured to determine the gap priority preference information corresponding to the at least one first gap based on the gap configuration message received by the receiving module; where the priority value of the at least one first gap is at least partially different from the priority values of the N measurement gaps.

In a possible implementation, the priority value of the at least one first gap may alternatively meet at least one of the following: not being used for comparison with the priority values of the N measurement gaps; and being configured as a target priority value, where the target priority value is configured by the network-side device or specified in a protocol.

In a possible implementation, the reporting module 51 may be specifically configured to report the gap priority preference information to the network-side device using a target parameter field. The target parameter field includes at least one of the following: a first parameter field, where the first parameter field is a parameter field for configuring gap priorities by the network-side device; and a second parameter field, where the second parameter field is a parameter field different from the parameter field for configuring gap priorities by the network-side device.

In a possible implementation, the gap priority preference information may include gap purpose information, and the gap purpose information is used for indicating a purpose of each first gap in the at least one first gap; where the purpose includes at least one of the following: paging monitoring; PO monitoring; PEI monitoring; serving cell measurement; neighboring cell measurement; intra-frequency measurement; inter-frequency measurement; a first purpose with a purpose priority greater than or equal to a first purpose priority threshold; and a second purpose with a purpose priority less than or equal to a second purpose priority threshold.

In a possible implementation, the at least one first gap may each be a MUSIM gap.

In the gap information reporting apparatus provided in this embodiment of this application, the gap information reporting apparatus can report the gap priority preference information including the priority value of at least one first gap to the network-side device, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the gap information reporting apparatus can report the gap priority preference information that meets a specific condition, so that the network-side device can learn about the corresponding gap priority preference to configure the priority of the gap, thereby avoiding or reducing reconfiguration of other measurement gaps by the network-side device.

The gap information reporting apparatus in this embodiment of this application may be an electronic device, such as an electronic device with an operating system, or a component in the electronic device, such as an integrated circuit or a chip. The electronic device may be a UE. For example, the UE may include but is not limited to the foregoing types of the UE 11. This is not specifically limited in the embodiments of this application.

The gap information reporting apparatus provided in this embodiment of this application is capable of implementing the processes implemented in the method embodiments on the UE side, with the same technical effects achieved. To avoid repetition, details are not described herein again.

With reference to FIG. 6, an embodiment of this application provides a gap information reporting apparatus 60, where the gap information reporting apparatus 60 may include a receiving module 61. The receiving module 61 may be configured to receive gap priority preference information reported by a UE, where the gap priority preference information includes a priority value of at least one first gap; where the priority value of the at least one first gap meets at least one of the following: being used for comparison with priority values of N measurement gaps configured by the gap information reporting apparatus 60, where N is a positive integer; a priority value of each first gap in the at least one first gap falling within a gap priority range; and being used to indicate a priority relationship between the at least one first gap.

In a possible implementation, the gap priority range may be configured by the gap information reporting apparatus 60 or specified by a protocol.

In a possible implementation, the gap priority preference information may include gap purpose information, and the gap purpose information is used for indicating a purpose of each first gap in the at least one first gap; where the purpose includes at least one of the following: paging monitoring; PO monitoring; PEI monitoring; serving cell measurement; neighboring cell measurement; intra-frequency measurement; inter-frequency measurement; a first purpose with a purpose priority greater than or equal to a first purpose priority threshold; and a second purpose with a purpose priority less than or equal to a second purpose priority threshold.

In a possible implementation, the at least one first gap may each be a MUSIM gap.

In a possible implementation, the gap information reporting apparatus 60 may further include a configuration module. The configuration module is configured to configure a priority value for the at least one first gap based on the gap priority preference information, after the receiving module 61 receives the gap priority preference information reported by the UE.

In a possible implementation, in a case that a first condition is met, the priority value configured by the gap information reporting apparatus 60 for the at least one first gap is the same as the priority value of the at least one first gap included in the gap priority preference information; where the first condition includes at least one of the following: the priority value of the at least one first gap being used for comparison with priority values of N measurement gaps configured by the gap information reporting apparatus 60; a priority value of each first gap falling within a gap priority range; and the priority value of the at least one first gap being configured as a target priority value, where the target priority value is configured by the gap information reporting apparatus 60 or specified in a protocol.

In a possible implementation, in a case that a second condition is met, the priority value configured by the gap information reporting apparatus 60 for the at least one first gap is at least partially different from the priority value of the at least one first gap included in the gap priority preference information; where the second condition includes at least one of the following that: the priority value of the at least one first gap is used to indicate a priority relationship between the at least one first gap; and the priority value of the at least one first gap is not used for comparison with the priority values of N measurement gaps configured by the gap information reporting apparatus 60.

In a possible implementation, the gap priority preference information is reported by the UE using a target parameter field; where the target parameter field includes at least one of the following: a first parameter field, where the first parameter field is a parameter field for configuring gap priorities by the gap information reporting apparatus 60; and a second parameter field, where the second parameter field is a parameter field different from the parameter field for configuring gap priorities by the gap information reporting apparatus 60.

In a possible implementation, the gap information reporting apparatus 60 may further include a sending module. The sending module may be configured to send a gap configuration message to the UE before the receiving module 61 receives the gap priority preference information reported by the UE; where the gap configuration message includes gap priority preference range information, where the gap priority preference range information is used to indicate the gap priority range.

According to the gap information reporting apparatus provided in this embodiment of this application, the gap information reporting apparatus can receive the gap priority preference information including the priority value of the at least one first gap and reported by the UE, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the gap information reporting apparatus can learn about the corresponding gap priority preference based on the gap priority preference information meeting a specific condition and reported by the UE, so as to configure the priority of the gap, thereby avoiding or reducing reconfiguration of other measurement gaps by the network-side device.

The gap information reporting apparatus in this embodiment of this application may be an electronic device, such as an electronic device with an operating system, or a component in the electronic device, such as an integrated circuit or a chip. The electronic device may be a device other than UE, for example, other devices may be a server, a network attached storage (Network Attached Storage, NAS), and the like. This is not specifically limited in the embodiments of this application.

The gap information reporting apparatus provided in this embodiment of this application is capable of implementing the processes implemented in the method embodiments on the network-side device, with the same technical effects achieved. To avoid repetition, details are not described herein again.

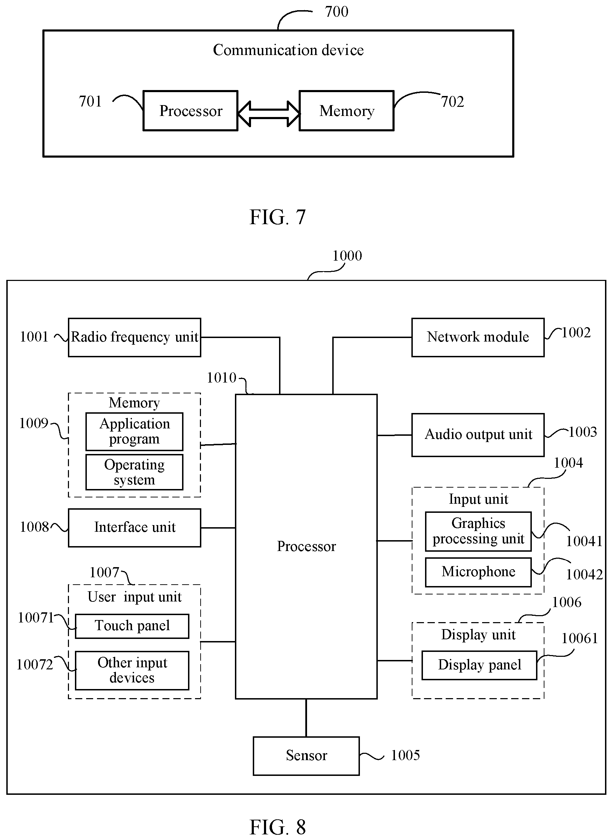

Optionally, as shown in FIG. 7, an embodiment of this application further provides a communication device 700, including a processor 701 and a memory 702. A program or instructions executable on the processor 701 are stored in the memory 702. For example, when the communication device 700 is a UE and when the program or the instructions are executed by the processor 701, the steps of the foregoing embodiments of the method on the UE side are implemented, with the same technical effects achieved. When the communication device 700 is a network-side device and when the program or the instructions are executed by the processor 701, the steps of the foregoing embodiments of the method on the network-side device side are implemented, with the same technical effects achieved. To avoid repetition, details are not described herein again.

An embodiment of the application further provides a UE, including a processor and a communication interface, where the communication interface is configured to report gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap. The UE embodiment corresponds to the foregoing UE side method embodiment, and the implementation processes and implementations of the foregoing method embodiments can be applied to the UE embodiments, with the same technical effects achieved. Specifically, FIG. 8 is schematic structural diagram of hardware of UE implementing an embodiment of this application.

The UE 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the UE 1000 may further include a power supply (such as a battery) for supplying power to the components. The power supply may be logically connected to the processor 1010 through a power management system. In this way, functions such as charge management, discharge management, and power consumption management are implemented by using the power management system. The structure of the UE shown in FIG. 8 does not constitute a limitation on the UE. The UE may include more or fewer components than those shown in the figure, or some components are combined, or component arrangements are different. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include the display panel 10061. The display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1009 described in this embodiment this application includes but is not limited to these and any other suitable types of memories.

The processor 1010 may include one or more processing units. Optionally, the processor 1010 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1010.

The radio frequency unit 1001 may be configured to report gap priority preference information to a network-side device, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap.

In a possible implementation, the gap priority range may be configured by the network-side device or specified by a protocol.

In a possible implementation, the priority value of the at least one first gap meets that the priority value of each first gap falls within the gap priority range configured by the network-side device. The radio frequency unit 1001 may be further configured to: before reporting the gap priority preference information to the network-side device, receive a gap configuration message sent by the network-side device, where the gap configuration message includes gap priority preference range information, and the gap priority preference range information is used for indicating the gap priority range. The processor 1010 may be configured to determine the gap priority preference information corresponding to the at least one first gap based on the gap configuration message received by the radio frequency unit 1001.

In a possible implementation, the priority value of the at least one first gap meets: being used for comparison with the priority values of the N measurement gaps. The radio frequency unit 1001 may be further configured to: before reporting the gap priority preference information to the network-side device, receive a gap configuration message sent by the network-side device, where the gap configuration message includes the priority values of the N measurement gaps. The processor 1010 may be configured to determine the gap priority preference information corresponding to the at least one first gap based on the gap configuration message received by the radio frequency unit 1001; where the priority value of the at least one first gap is at least partially different from the priority values of the N measurement gaps.

In a possible implementation, the priority value of the at least one first gap may alternatively meet at least one of the following: not being used for comparison with the priority values of the N measurement gaps; and being configured as a target priority value, where the target priority value is configured by the network-side device or specified in a protocol.

In a possible implementation, the radio frequency unit 1001 may be specifically configured to report the gap priority preference information to the network-side device using a target parameter field. The target parameter field includes at least one of the following: a first parameter field, where the first parameter field is a parameter field for configuring gap priorities by the network-side device; and a second parameter field, where the second parameter field is a parameter field different from the parameter field for configuring gap priorities by the network-side device.

In a possible implementation, the gap priority preference information may include gap purpose information, and the gap purpose information is used for indicating a purpose of each first gap in the at least one first gap; where the purpose includes at least one of the following: paging monitoring; PO monitoring; PEI monitoring; serving cell measurement; neighboring cell measurement; intra-frequency measurement; inter-frequency measurement; a first purpose with a purpose priority greater than or equal to a first purpose priority threshold; and a second purpose with a purpose priority less than or equal to a second purpose priority threshold.

In a possible implementation, the at least one first gap may each be a MUSIM gap.

According to the UE provided in this embodiment of this application, the UE can report the gap priority preference information including the priority value of at least one first gap to the network-side device, and the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the UE can report the gap priority preference information that meets a specific condition, so that the network-side device can learn about the corresponding gap priority preference to configure the priority of the gap, thereby avoiding or reducing reconfiguration of other measurement gaps by the network-side device.

The UE provided in this embodiment of this application can implement the processes implemented by the UE in the foregoing method embodiment, with the same technical effects achieved. To avoid repetition, details are not described herein again.

An embodiment of the application further provides a network-side device, including a processor and a communication interface, where the communication interface is configured to receive gap priority preference information reported by UE, where the gap priority preference information includes a priority value of at least one first gap; where the priority value of the at least one first gap meets at least one of the following: being used for comparison with priority values of N measurement gaps configured by the network-side device, where N is a positive integer; a priority value of each first gap in the at least one first gap falling within a gap priority range; and being used to indicate a priority relationship between the at least one first gap. The network-side device embodiment corresponds to the foregoing network-side device method embodiment, and the implementation processes and implementations of the foregoing method embodiments can be applied to the network-side device embodiments, with the same technical effects achieved.

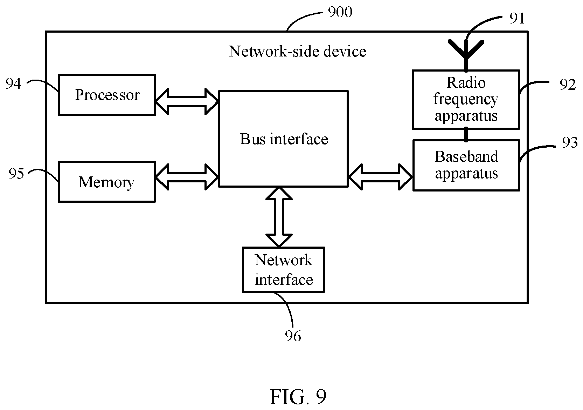

Specifically, an embodiment of this application further provides a network-side device. As shown in FIG. 9, the network-side device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method performed by the network-side device in the foregoing embodiment may be implemented in the baseband apparatus 93, and the baseband apparatus 93 includes a baseband processor.

The baseband apparatus 93 may include, for example, at least one baseband processing unit, where a plurality of chips are disposed on the baseband processing unit. As shown in FIG. 9, one of the chips is, for example, the baseband processor, and connected to the memory 95 through a bus interface, to invoke the program in the memory 95 to perform the operations of the network side device shown in the foregoing method embodiment.

The network-side device may further include a network interface 96, where the interface is, for example, a common public radio interface (common public radio interface, CPRI).

Specifically, the network-side device 900 according to this embodiment of this application further includes instructions or programs stored in the memory 95 and executable on the processor 94, and the processor 94 calls the instructions or programs in the memory 95 to execute the methods performed by the modules shown in FIG. 6, with the same technical effects achieved. To avoid repetition, details are not described herein again.

The radio frequency apparatus 92 may be configured to receive gap priority preference information reported by a UE, where the gap priority preference information includes a priority value of at least one first gap; where the priority value of the at least one first gap meets at least one of the following: being used for comparison with priority values of N measurement gaps configured by the network-side device 900, where N is a positive integer; a priority value of each first gap in the at least one first gap falling within a gap priority range; and being used to indicate a priority relationship between the at least one first gap.

In a possible implementation, the gap priority range may be configured by the gap information reporting apparatus 60 or specified by a protocol.

In a possible implementation, the gap priority preference information may include gap purpose information, and the gap purpose information is used for indicating a purpose of each first gap in the at least one first gap; where the purpose includes at least one of the following: paging monitoring; PO monitoring; PEI monitoring; serving cell measurement; neighboring cell measurement; intra-frequency measurement; inter-frequency measurement; a first purpose with a purpose priority greater than or equal to a first purpose priority threshold; and a second purpose with a purpose priority less than or equal to a second purpose priority threshold.

In a possible implementation, the at least one first gap may each be a MUSIM gap.

The processor 94 is configured to configure a priority value for the at least one first gap based on the gap priority preference information, after the radio frequency apparatus 92 receives the gap priority preference information reported by the UE.

In a possible implementation, in a case that a first condition is met, the priority value configured by the network-side device 900 for the at least one first gap is the same as the priority value of the at least one first gap included in the gap priority preference information; where the first condition includes at least one of the following: the priority value of the at least one first gap being used for comparison with priority values of N measurement gaps configured by the network-side device 900; a priority value of each first gap falling within a gap priority range; and the priority value of the at least one first gap being configured as a target priority value, where the target priority value is configured by the network-side device 900 or specified in a protocol.

In a possible implementation, in a case that a second condition is met, the priority value configured by the network-side device 900 for the at least one first gap is at least partially different from the priority value of the at least one first gap included in the gap priority preference information; where the second condition includes at least one of the following that: the priority value of the at least one first gap is used to indicate a priority relationship between the at least one first gap; and the priority value of the at least one first gap is not used for comparison with the priority values of N measurement gaps configured by the network-side device 900.

In a possible implementation, the gap priority preference information is reported by the UE using a target parameter field; where the target parameter field includes at least one of the following: a first parameter field, where the first parameter field is a parameter field for configuring gap priorities by the network-side device 900; and a second parameter field, where the second parameter field is a parameter field different from the parameter field for configuring gap priorities by the network-side device 900.

In a possible implementation, the radio frequency apparatus 92 may be further configured to send a gap configuration message to the UE before receiving the gap priority preference information reported by the UE; where the gap configuration message includes gap priority preference range information, where the gap priority preference range information is used to indicate the gap priority range.

According to the network-side device provided in this embodiment of this application, the network-side device can receive the gap priority preference information including the priority value of at least one first gap and reported by the UE, where the priority value of the at least one first gap meets at least one of the following requirements: being used for comparison with priority values of N measurement gaps configured by the network-side device; a priority value of each first gap falling within a gap priority range; and being used to indicate a priority relationship between the at least one first gap. In this way, the network-side device can learn about the corresponding gap priority preference based on the gap priority preference information meeting specific conditions and reported by the UE, so as to configure the priority of the configured gap, thus avoiding or reducing reconfiguration of other measurement gaps by the network-side device.

The network-side device provided in this embodiment of this application can implement the processes implemented by the network-side device in the foregoing method embodiment, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the gap information reporting method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the gap information reporting method, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the gap information reporting method, with the same technical effects achieved. To avoid repetition, details are not repeated herein.

An embodiment of this application further provides a communication system, including a UE and a network-side device, where the UE can be configured to execute the steps performed by the UE in the method embodiments on the UE side, and the network-side device can be configured to execute the steps performed by the network-side device in the method embodiments on the network-side device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on this understanding, the technical scheme of this application may be embodied in the form of a computer software product, which is stored in a storage medium (such as ROM/RAM, magnetic disk and optical disk) and includes several instructions to make a terminal (which may be a mobile phone, a computer, a server, an air conditioner, or a network device, and the like.) execute the methods described in various embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A gap information reporting method, wherein the method comprises;
reporting, by a user equipment UE, gap priority preference information to a network-side device, wherein the gap priority preference information comprises a priority value of at least one first gap; wherein
the priority value of the at least one first gap meets at least one of the following:
being used for comparison with priority values of N measurement gaps configured by the network-side device, wherein N is a positive integer;
a priority value of each first gap in the at least one first gap falling within a gap priority range; and
being used to indicate a priority relationship between the at least one first gap.

2. The method according to claim 1, wherein the gap priority range is configured by the network-side device or specified by a protocol.

3. The method according to claim 2, wherein the priority value of the at least one first gap meets that the priority value of each first gap falls within the gap priority range configured by the network-side device; and
before the reporting, by a user equipment UE, gap priority preference information to a network-side device, the method further comprises:
receiving, by the UE, a gap configuration message sent by the network-side device, wherein the gap configuration message comprises gap priority preference range information, and the gap priority preference range information is used for indicating the gap priority range; and
determining, by the UE based on the gap configuration message, the gap priority preference information corresponding to the at least one first gap.

4. The method according to claim 1, wherein the priority value of the at least one first gap meets: being used for comparison with the priority values of the N measurement gaps; and
before the reporting, by a user equipment UE, gap priority preference information to a network-side device, the method further comprises:
receiving, by the UE, a gap configuration message sent by the network-side device, wherein the gap configuration message comprises the priority values of the N measurement gaps; and
determining, by the UE based on the gap configuration message, the gap priority preference information corresponding to the at least one first gap; wherein
the priority value of the at least one first gap is at least partially different from the priority values of the N measurement gaps.

5. The method according to claim 1, wherein the priority value of the at least one first gap further meets at least one of the following:
not being used for comparison with the priority values of the N measurement gaps; and
being configured as a target priority value, wherein the target priority value is configured by the network-side device or specified in a protocol.

6. The method according to any one of claims 1 to 5, wherein the reporting, by a UE, gap priority preference information to a network-side device comprises:
reporting, by the UE, the gap priority preference information to the network-side device using a target parameter field; wherein
the target parameter field comprises at least one of the following:
a first parameter field, wherein the first parameter field is a parameter field for configuring gap priorities by the network-side device; and
a second parameter field, wherein the second parameter field is a parameter field different from the parameter field for configuring gap priorities by the network-side device.

7. The method according to any one of claims 1 to 5, wherein the gap priority preference information comprises gap purpose information, and the gap purpose information is used for indicating a purpose of each first gap in the at least one first gap; wherein
the purpose comprises at least one of the following:
paging monitoring;
paging occasion PO monitoring;
paging early indication PEI monitoring;
serving cell measurement;
neighboring cell measurement;
intra-frequency measurement;
inter-frequency measurement;
a first purpose with a purpose priority greater than or equal to a first purpose priority threshold; and
a second purpose with a purpose priority less than or equal to a second purpose priority threshold.

8. The method according to any one of claims 1 to 7, wherein the at least one first gap is a multi-universal subscriber identity module MUSIM gap.

9. A gap information reporting method, wherein the method comprises:
receiving, by a network-side device, gap priority preference information reported by a UE, wherein the gap priority preference information comprises a priority value of at least one first gap; wherein
the priority value of the at least one first gap meets at least one of the following:
being used for comparison with priority values of N measurement gaps configured by the network-side device, wherein N is a positive integer;
a priority value of each first gap in the at least one first gap falling within a gap priority range; and
being used to indicate a priority relationship between the at least one first gap.

10. The method according to claim 9, wherein the gap priority range is configured by the network-side device or specified by a protocol.

11. The method according to claim 9 or 10, wherein the gap priority preference information comprises gap purpose information, and the gap purpose information is used for indicating a purpose of each first gap in the at least one first gap; wherein
the purpose comprises at least one of the following:
paging monitoring;
PO monitoring;
PEI monitoring;
serving cell measurement;
neighboring cell measurement;
intra-frequency measurement;
inter-frequency measurement;
a first purpose with a purpose priority greater than or equal to a first purpose priority threshold; and
a second purpose with a purpose priority less than or equal to a second purpose priority threshold.

12. The method according to any one of claims 9 to 11, wherein the at least one first gap is a MUSIM gap.

13. The method according to any one of claims 9 to 12, wherein after the receiving, by a network-side device, gap priority preference information reported by a UE, the method further comprises:
configuring, by the network-side device, a priority value for the at least one first gap based on the gap priority preference information.

14. The method according to claim 13, wherein in a case that a first condition is met, the priority value configured by the network-side device for the at least one first gap is the same as the priority value of the at least one first gap comprised in the gap priority preference information; wherein
the first condition comprises at least one of the following that:
the priority value of the at least one first gap is used for comparison with the priority values of N measurement gaps configured by the network-side device;
the priority value of each first gap falls within the gap priority range; and
the priority value of the at least one first gap is configured as a target priority value, wherein the target priority value is configured by the network-side device or specified in a protocol.

15. The method according to claim 13, wherein in a case that a second condition is met, the priority value configured by the network-side device for the at least one first gap is at least partially different from the priority value of the at least one first gap comprised in the gap priority preference information; wherein
the second condition comprises at least one of the following that:
the priority value of the at least one first gap is used to indicate a priority relationship between the at least one first gap; and
the priority value of the at least one first gap is not used for comparison with the priority values of N measurement gaps configured by the network-side device.

16. The method according to claim 9, wherein the gap priority preference information is reported by the UE using a target parameter field;
the target parameter field comprises at least one of the following:
a first parameter field, wherein the first parameter field is a parameter field for configuring gap priorities by the network-side device; and
a second parameter field, wherein the second parameter field is a parameter field different from the parameter field for configuring gap priorities by the network-side device.

17. The method according to any one of claims 9 to 12, wherein before the receiving, by a network-side device, gap priority preference information reported by a UE, the method further comprises:
sending, by the network-side device, a gap configuration message to the UE; wherein
the gap configuration message comprises:
gap priority preference range information, wherein the gap priority preference range information is used to indicate the gap priority range.

18. A gap information reporting apparatus, wherein the apparatus comprises a reporting module; and
the reporting module is configured to report gap priority preference information to a network-side device, wherein the gap priority preference information comprises a priority value of at least one first gap; wherein
the priority value of the at least one first gap meets at least one of the following:
being used for comparison with priority values of N measurement gaps configured by the network-side device, wherein N is a positive integer;
a priority value of each first gap in the at least one first gap falling within a gap priority range; and
being used to indicate a priority relationship between the at least one first gap.

19. The apparatus according to claim 18, wherein the gap priority range is configured by the network-side device or specified by a protocol.

20. The apparatus according to claim 19, wherein the priority value of the at least one first gap meets that the priority value of each first gap falls within the gap priority range configured by the network-side device; and the apparatus further comprises a receiving module and a determining module; wherein
the receiving module is configured to: before the reporting module reports the gap priority preference information to the network-side device, receive a gap configuration message sent by the network-side device, wherein the gap configuration message comprises gap priority preference range information, and the gap priority preference range information is used for indicating the gap priority range; and
the determining module is configured to determine the gap priority preference information corresponding to the at least one first gap based on the gap configuration message received by the receiving module.

21. The apparatus according to claim 18, wherein the priority value of the at least one first gap meets: being used for comparison with the priority values of the N measurement gaps; and the apparatus further comprises a receiving module and a determining module; wherein
the receiving module is configured to: before the reporting module reports the gap priority preference information to the network-side device, receive a gap configuration message sent by the network-side device, wherein the gap configuration message comprises the priority values of the N measurement gaps; and
the determining module is configured to determine the gap priority preference information corresponding to the at least one first gap based on the gap configuration message received by the receiving module; wherein
the priority value of the at least one first gap is at least partially different from the priority values of the N measurement gaps.

22. The apparatus according to claim 18, wherein
the priority value of the at least one first gap further meets at least one of the following:
not being used for comparison with the priority values of the N measurement gaps; and
being configured as a target priority value, wherein the target priority value is configured by the network-side device or specified in a protocol.

23. The apparatus according to any one of claims 18 to 22, wherein
the reporting module is specifically configured to report the gap priority preference information to the network-side device using a target parameter field; wherein
the target parameter field comprises at least one of the following:
a first parameter field, wherein the first parameter field is a parameter field for configuring gap priorities by the network-side device; and
a second parameter field, wherein the second parameter field is a parameter field different from the parameter field for configuring gap priorities by the network-side device.

24. The apparatus according to any one of claims 18 to 22, wherein the gap priority preference information comprises gap purpose information, and the gap purpose information is used for indicating a purpose of each first gap in the at least one first gap; wherein
the purpose comprises at least one of the following:
paging monitoring;
PO monitoring;
PEI monitoring;
serving cell measurement;
neighboring cell measurement;
intra-frequency measurement;
inter-frequency measurement;
a first purpose with a purpose priority greater than or equal to a first purpose priority threshold; and
a second purpose with a purpose priority less than or equal to a second purpose priority threshold.

25. The apparatus according to any one of claims 18 to 24, wherein the at least one first gap is a MUSIM gap.

26. A gap information reporting apparatus, wherein the apparatus comprises a receiving module; and
the receiving module is configured to receive gap priority preference information reported by a UE, wherein the gap priority preference information comprises a priority value of at least one first gap; wherein
the priority value of the at least one first gap meets at least one of the following:
being used for comparison with priority values of N measurement gaps configured by the gap information reporting apparatus, wherein N is a positive integer;
a priority value of each first gap in the at least one first gap falling within a gap priority range; and
being used to indicate a priority relationship between the at least one first gap.

27. The apparatus according to claim 26, wherein the apparatus further comprises a configuration module; and
the configuration module is configured to configure a priority value for the at least one first gap based on the gap priority preference information, after the receiving module receives the gap priority preference information reported by the UE.

28. The apparatus according to claim 26 or 27, wherein the apparatus further comprises a sending module; and
the sending module is configured to send a gap configuration message to the UE before the receiving module receives the gap priority preference information reported by the UE; wherein
the gap configuration message comprises gap priority preference range information, wherein the gap priority preference range information is used to indicate the gap priority range.

29. A UE, comprising a processor and a memory, wherein the memory stores a program or instructions executable on the processor, and when the program or instructions are executed by the processor, the steps of the gap information reporting method according to any one of claims 1 to 8 are implemented.

30. A network-side device, comprising a processor and a memory, wherein the memory stores a program or instructions executable on the processor, and when the program or instructions are executed by the processor, the steps of the gap information reporting method according to any one of claims 9 to 17 are implemented.

31. A communication system, wherein the communication system comprises the gap information reporting apparatus according to claim 18 and the gap information reporting apparatus according to claim 26; or
the communication system comprises the UE according to claim 29 and the network-side device according to claim 30.

32. A readable storage medium, wherein the readable storage medium stores a program or instructions, and when the program or instructions are executed by a processor, the steps of the gap information reporting method according to any one of claims 1 to 8 are implemented, or the steps of the gap information reporting method according to any one of claims 9 to 17 are implemented.
